# EUROPEAN PATENT APPLICATION

(11) **EP 4 001 597 A1**
(43) Date of publication of application: **25.05.2022**
(21) Application number: 21209876.8
(22) Date of filing: 23.11.2021
(51) Int. Cl.: F01D 25/18, F02C 7/277, F02C 7/32

(54) **STARTER TURBINE PROVIDING GAS TURBINE BEARING COMPARTMENT BUFFER AIR**

(30) Priority: 23.11.2020 US 202017101623
(71) Applicant: Raytheon Technologies Corporation, Farmington, CT 06032 (US)
(72) Inventor: SAWYERS-ABBOTT, Nigel David, South Glastonbury, 06073 (US); GLAHN, Jorn Axel, Manchester, 06042 (US)
(74) Representative: Dehns

(57) **Abstract**

A gas turbine engine (20) includes at least one shaft that interconnects a compressor section (24) and a turbine section (28). A starter turbine (90) provides torque to the at least one shaft (118) during an engine start event. The starter turbine (90) includes an air inlet (108) and an outlet (112). A buffer air system (140) is in fluid communication with the starter turbine (90) and is configured to receive air associated with the outlet (112) to supplement sealing of a bearing compartment sealing system.

## Description

### TECHNICAL FIELD

This application relates to gas turbine engines and improving sealing of an oil system during start-up.

### BACKGROUND

Gas turbine engines are known to power aircraft. In a gas turbine engine, a fan delivers air into a bypass duct as propulsion air, and also into a compressor. The compressor compresses the air and delivers the compressed air into a combustor to be mixed with fuel and ignited. Products of combustion pass downstream over turbine rotors, driving the rotors to rotate. The turbine rotors in turn drive the fan and compressor rotors.

An oil system provides lubricant for rotating components such as bearings. Seals provide for a sealed bearing compartment such that oil does not leak to other parts of the engine. During engine start-up there may not be sufficient pressure to fully seal the bearing components, which can lead to weepage. Weepage of oil can interact with the environmental control system (ECS) leading to cabin odor events.

### SUMMARY

According to an aspect, there is provided a gas turbine engine including at least one shaft that interconnects a compressor section and a turbine section. A starter turbine provides torque to the at least one shaft during an engine start event. The starter turbine includes an air inlet and an outlet. A buffer air system is in fluid communication with the starter turbine and is configured to receive air associated with the outlet to supplement sealing of a bearing compartment sealing system.

In a further embodiment of any of the above, at least one conduit receives the air associated with the outlet and directs the air into the buffer air system to maintain a positive delta pressure across bearing compartment seals of the bearing compartment sealing system during the engine start event.

In a further embodiment of any of the above, at least one valve is associated with the at least one conduit to prevent backflow once gas turbine engine produced pressure exceeds pressure of the starter turbine.

In a further embodiment of any of the above, the at least one valve comprises a check valve.

In a further embodiment of any of the above, the air inlet receives air from at least one of an auxiliary power unit, a ground start cart, or an opposing gas turbine engine.

In a further embodiment of any of the above, exhaust exiting the outlet of the starter turbine is directed into the buffer air system.

In a further embodiment of any of the above, the starter turbine is coupled to the at least one shaft via a tower shaft and gear assembly.

In a further embodiment of any of the above, the bearing compartment sealing system includes at least one bearing positioned within a bearing compartment, at least one first seal positioned upstream of the at least one bearing, and at least one second seal positioned downstream of the at least one bearing, and wherein buffer air supplied by the buffer air system facilitates sealing of the first and second seals to prevent weeping of oil out of the bearing compartment during the start event.

According to an aspect, there is provided a gas turbine engine including at least a first shaft and a second shaft, wherein the first shaft interconnects a first compressor section and a first turbine section, and wherein the first shaft rotates about an engine axis of rotation at a first speed. The second shaft interconnects a second compressor section and a second turbine section, wherein the second shaft rotates at a second speed faster than the first speed. At least one bearing supports one of the first and second shafts, the at least one bearing being positioned within a bearing compartment sealed by a seal assembly. A starter turbine provides torque to the second shaft during an engine start event. The starter turbine includes an air inlet and an outlet. A buffer air system is in fluid communication with the starter turbine via at least one conduit. The at least one conduit receives air associated with the outlet, and directs the air into the buffer air system to maintain a positive delta pressure across the seal assembly during the engine start event.

In a further embodiment of any of the above, at least one valve is associated with the at least one conduit to control air flow between the buffer air system and the starter turbine.

In a further embodiment of any of the above, the at least one valve comprises a check valve.

In a further embodiment of any of the above, the air inlet receives air from at least one of an auxiliary power unit, a ground start cart, or an opposing gas turbine engine.

In a further embodiment of any of the above, exhaust exiting the outlet of the starter turbine is directed into the at least one conduit.

In a further embodiment of any of the above, the starter turbine is coupled to the second shaft via a tower shaft and gear assembly.

In a further embodiment of any of the above, the at least one bearing supports the second shaft, and wherein the seal assembly includes at least one first seal positioned upstream of the at least one bearing and at least one second seal positioned downstream of the at least one bearing, and wherein buffer air supplied by the buffer air system facilitates sealing of the first and second seals to prevent weeping of oil out of the bearing compartment during the engine start event.

In a further embodiment of any of the above, a fan section is connected to the first shaft through a geared architecture.

According to a further aspect, there is provided a method comprising providing at least a first shaft and a second shaft, wherein the first shaft interconnects a first compressor section and a first turbine section, and wherein the at least one first shaft rotates about an engine axis of rotation at a first speed. The method further includes interconnecting a second compressor section and a second turbine section via the second shaft, wherein the second shaft rotates at a second speed faster than the first speed. The method further includes supporting one of the first and second shafts with at least one bearing, the at least one bearing positioned within a bearing compartment sealed by a seal assembly. The method further includes providing torque to the second shaft during an engine start event using a starter turbine, the starter turbine including an air inlet and an outlet. The method further includes connecting a buffer air system with the starter turbine via at least one conduit, wherein the at least one conduit receives air associated with the outlet and directs the air into the buffer air system to maintain a positive delta pressure across the seal assembly during the engine start event.

In a further embodiment of any of the above, the method further includes coupling the air inlet to receive air from at least one of an auxiliary power unit, a ground start cart, or an opposing gas turbine engine.

In a further embodiment of any of the above, the method further includes providing at least one valve associated with the at least one conduit to control air flow between the buffer air system and the starter turbine.

In a further embodiment of any of the above, the at least one valve comprises a check valve.

### BRIEF DESCRIPTION OF THE DRAWINGS

These and other features can be best understood from the following specification and drawings, the following which is a brief description.
Figure 1 shows a standard gas turbine engine;
Figure 2 is a partial section side view of a bearing compartment and bearing seals;
Figure 3 is a schematic view of an aircraft and an auxiliary power unit (APU) starting system;
Figure 4 is a perspective view of a starter turbine as used in the aircraft of Figure 3;
Figure 5 is a schematic, partial side section view of the starter turbine, tower shaft, and buffer air system to supply buffer air to the bearing seals of Figure 2 in one example embodiment; and
Figure 6 is similar to Figure 3 but shows supplying air from an already running gas turbine engine to the starter turbine for an opposite side gas turbine engine.

### DETAILED DESCRIPTION

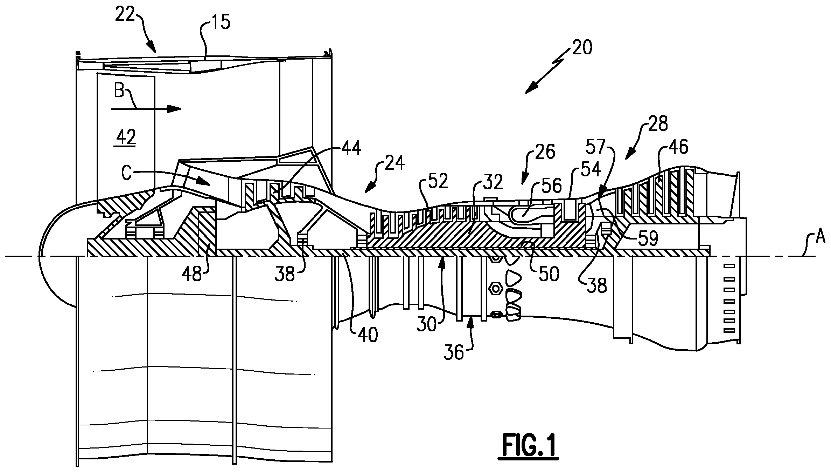

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

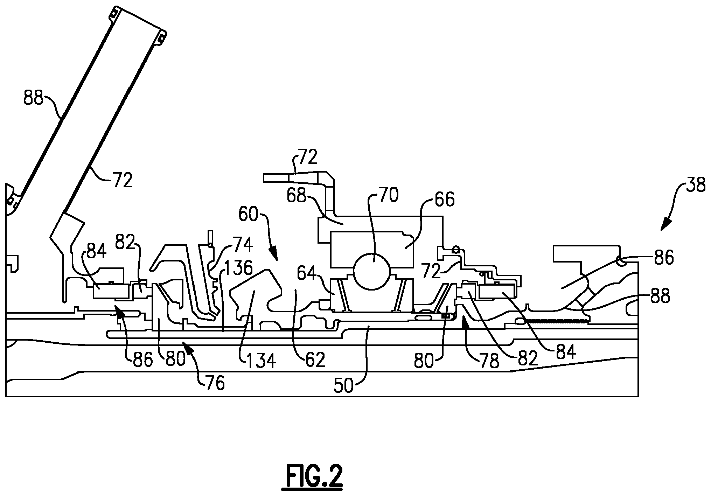

Figure 2 shows one example of the bearing system 38. In this example, at least one bearing 60 supports one of the first 40 and second 50 shafts and is positioned within a bearing compartment 62 sealed by a seal assembly for a sealing system. In the example shown, the bearing 60 supports the second shaft 50 and includes an inner race 64 fixed to the second shaft 50 and an outer race 66 fixed to a static case structure 68. Rolling elements 70 are received between the inner race 64 and outer race 66. A plurality of static case wall portions 72 enclose the bearing compartment 62 and an oil supply nozzle 74 supplies oil to the bearing compartment 62 to lubricate the bearing 60.

As shown in Figure 2, the seal assembly seals the bearing compartment 62 to keep the oil from leaking to other parts of the engine. In one example, the seal assembly includes at least one first seal 76 positioned upstream of the bearing 60 and at least one second seal 78 positioned downstream of the bearing 60. In one example, the first 76 and second 78 seals comprise face seals that include a rotating seal member 80 that rotates with the shaft 50 and a non-rotating seal member 82 that is mounted to one of the static case wall portions 72. A resilient member 84 cooperates with the non-rotating seal member 82 to move the non-rotating seal member 82 into sealing contact with the rotating seal member 80 to seal the bearing compartment 62.

Buffer air, indicated at 86 (Figure 2), is supplied via passageways 88 to facilitate sealing of the oil system. During an engine start event, there may be insufficient buffer air provided by a compressor bleed extraction to ensure sealing of the oil system from the air system associated with the ECS. Weepage of oil can interact with the ECS and lead to passenger cabin odor events.

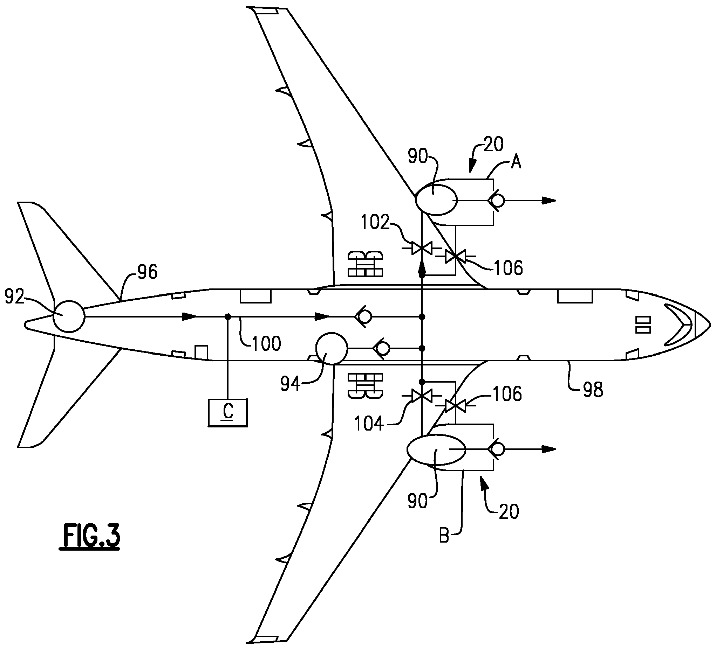

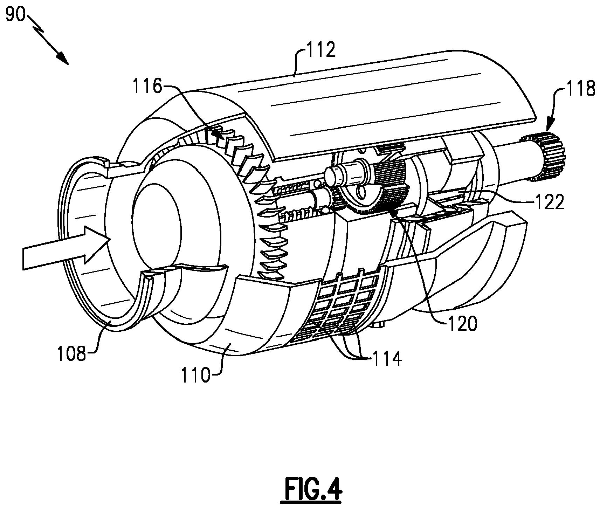

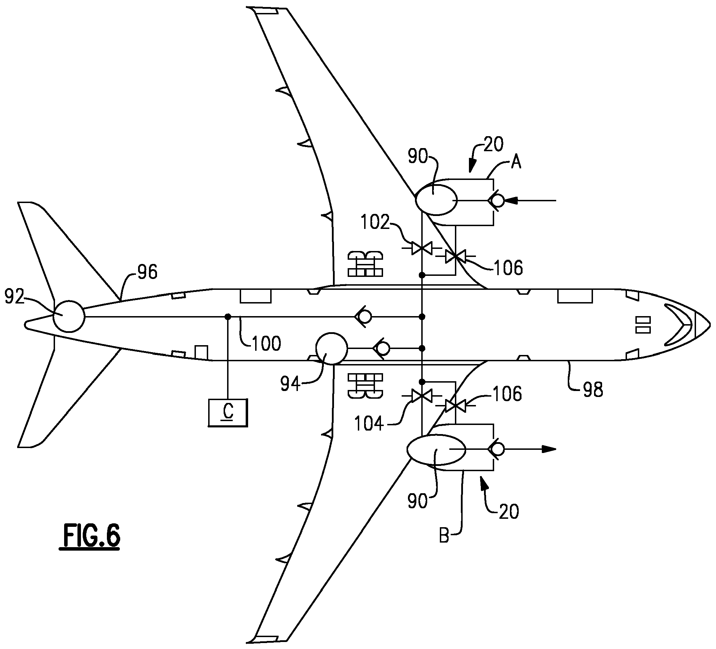

In one example, air associated with a starter turbine 90 (Figure 4) is used to supplement the buffer air 86 during an engine start event. As shown in Figure 3, each gas turbine engine 20 includes a starter turbine 90. The starter turbine 90 is supplied with high pressure air from an auxiliary power unit (APU) 92, a ground start cart 94, or an opposing gas turbine engine 20 (see Figure 6). Figure 3 shows an example where bleed air from the APU 92 is directed into the starter turbine 90 for engine A. Typically, the APU 92 is located in a tail section 96 of an aircraft 98. The APU 92 is used to provide compressed air for the ECS and allows the aircraft to operate autonomously without reliance on ground support, as well as being used to start the engines 20. Conduits 100 conduct the air from the APU 92 to the starter turbine 90.

A first valve 102 to engine A is open and a second valve 104 to engine B is closed during the starting event. Valves 106 associated with bleed off air from the engines A and B are also closed during the starting event. A control system C with a controller controls operation of the APU 92 and valves 102, 104, 106. The control system C includes a dedicated electronic control unit or can be an electronic control unit for another aircraft or engine system. The controller can include a processor, memory, and one or more input and/or output (I/O) device interface(s) that are communicatively coupled via a local interface. The controller may be a hardware device for executing software, particularly software stored in memory. The software in the memory may include one or more separate programs, each of which includes an ordered listing of executable instructions for implementing logical functions to control operation of the valves and APU dependent upon various engine operating conditions.

Optionally, instead of the APU 92, the ground start cart 94 can be used to supply the air to the starter turbine 90.

Figure 6 shows an example where engine B is started using air supplied by engine A. The valve 106 for bleed air from engine A is open and supplies air to the starter turbine 90 for engine B. The valve 106 associated with bleed off air from the engine B is closed during the starting event. The first valve 102 to engine A is closed and the second valve 104 to engine B is open during the starting event.

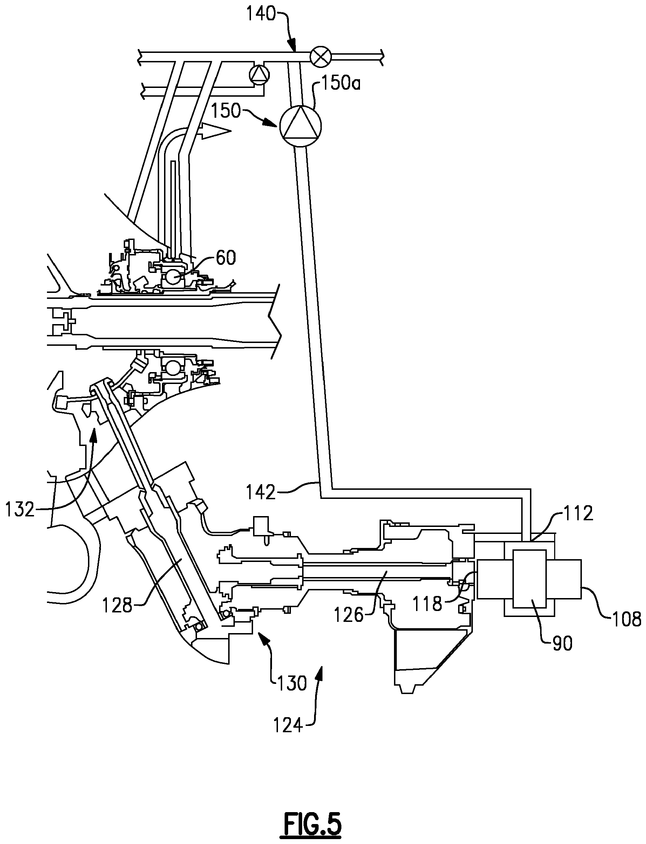

As shown in Figure 4, air from the APU, opposing engine, or cart enters an inlet 108 to the starter turbine 90. In this example, the starter turbine 90 has an outer engine casing 110 that has the inlet 108 and an outlet 112, which is formed via a plurality of openings 114 formed in the outer engine casing 110 about a center peripheral portion. The air rotates a turbine rotor 116 that is coupled to an engine drive shaft 118 via a reduction gear 120 and clutch 122. As shown in Figure 5, the engine drive shaft 118 provides torque to a tower shaft arrangement 124 that drives the second shaft 50 (Figure 2).

In one example shown in Figure 5, the tower shaft arrangement 124 includes a first tower shaft 126 that is coupled to the engine drive shaft 118 and a second tower shaft 128 that is driven by the first tower shaft 126 via a gear coupling 130. The second tower shaft 128 drives the second shaft 50 via a gear coupling 132 that includes a gear 134 that is fixed for rotation with the second shaft 50 as shown in Figure 2. A spacer 136 separates an upstream face of the gear 134 from the downstream face of the rotating seal member 80 of the first seal 76. Thus, the gear 134, the spacer 136, the inner race 64 of the bearing 60, and the rotating seal members 80 of the first 76 and second 78 seals all rotate with the second shaft 50.

As shown in Figure 5, a buffer air system 140 is in fluid communication with the starter turbine 90 via at least one conduit 142. The conduit 142 receives air associated with the air outlet 112 and directs the air into the buffer air system 140 via the conduit 142 to supply pressurized air to the bearing seals 76, 78.

The conduit 142 (Figure 5) supplies air associated with the starter turbine 90 to the buffer air system 140 to maintain a positive delta pressure across the bearing compartment seals 76, 78 during the start event and to avert oil egressing from the bearing compartment 62. As shown in Figure 2, the buffer air 86 supplied by the buffer air system 140 thus facilitates sealing of the first 76 and second 78 seals to prevent weeping of oil out of the bearing compartment 62 during the engine start event.

At least one valve 150 (Figures 5-6) is associated with the conduit 142 to control air flow between the buffer air system 140 and the starter turbine 90. Figure 5 shows an example where the valve 150 comprises check valve 150a that prevents backflow once gas turbine engine produced pressure exceeds pressure of the starter turbine 90.

The subject disclosure utilizes the starter turbine 90 to provide torque through the gearbox and tower shaft to rotate the HPC during the engine start event. The starter turbine is fed high pressure air from the APU, ground cart, or opposing engine. In order to supplement buffer air to the bearing compartments and prevent oil leakage past the seals into undesirable areas, such as the ECS extraction, the exhaust air from the starter turbine is re-directed into the buffer system. This reduces the number of cabin odor events due to oil weepage during engine start. The check valve or control valve can be used to prevent backflow of air once the engine produced pressure exceeds the turbine.

An embodiment of this disclosure has been described. However, a worker of ordinary skill in this art would recognize that modification would come within the scope of this disclosure. For that reason, the following claims should be studied to determine the true scope and content.

## Claims

1. A gas turbine engine comprising:
at least one shaft that interconnects a compressor section and a turbine section;
a starter turbine to provide torque to the at least one shaft during an engine start event, the starter turbine including an air inlet and an outlet; and
a buffer air system in fluid communication with the starter turbine and configured to receive air associated with the outlet to supplement sealing of a bearing compartment sealing system.

2. The gas turbine engine as recited in claim 1, including at least one conduit that receives the air associated with the outlet and directs the air into the buffer air system to maintain a positive delta pressure across bearing compartment seals of the bearing compartment sealing system during the engine start event.

3. The gas turbine engine as recited in claim 2, including at least one valve associated with the at least one conduit to prevent backflow once gas turbine engine produced pressure exceeds pressure of the starter turbine.

4. The gas turbine engine as recited in claim 3, wherein the at least one valve comprises a check valve.

5. The gas turbine engine as recited in any preceding claim, wherein the air inlet receives air from at least one of an auxiliary power unit, a ground start cart, or an opposing gas turbine engine.

6. The gas turbine engine as recited any preceding claim, wherein exhaust exiting the outlet of the starter turbine is directed into the buffer air system.

7. The gas turbine engine as recited in any preceding claim, wherein the starter turbine is coupled to the at least one shaft via a tower shaft and gear assembly.

8. The gas turbine engine as recited in any preceding claim, wherein the bearing compartment sealing system includes at least one bearing positioned within a bearing compartment, at least one first seal positioned upstream of the at least one bearing, and at least one second seal positioned downstream of the at least one bearing, and wherein buffer air supplied by the buffer air system facilitates sealing of the first and second seals to prevent weeping of oil out of the bearing compartment during the start event.

9. A gas turbine engine comprising:
at least a first shaft and a second shaft, wherein the first shaft interconnects a first compressor section and a first turbine section, and wherein the first shaft rotates about an engine axis of rotation at a first speed;
the second shaft interconnecting a second compressor section and a second turbine section, wherein the second shaft rotates at a second speed faster than the first speed;
at least one bearing supporting one of the first and second shafts, the at least one bearing positioned within a bearing compartment sealed by a seal assembly;
a starter turbine to provide torque to the second shaft during an engine start event, the starter turbine including an air inlet and an outlet; and
a buffer air system in fluid communication with the starter turbine via at least one conduit, wherein the at least one conduit receives air associated with the outlet and directs the air into the buffer air system to maintain a positive delta pressure across the seal assembly during the engine start event.

10. The gas turbine engine as recited in claim 9, including at least one valve associated with the at least one conduit to control air flow between the buffer air system and the starter turbine,
wherein, optionally, the at least one valve comprises a check valve.

11. The gas turbine engine as recited in claim 9 or 10, wherein the air inlet receives air from at least one of an auxiliary power unit, a ground start cart, or an opposing gas turbine engine; and/or
wherein exhaust exiting the outlet of the starter turbine is directed into the at least one conduit; and/or
wherein the starter turbine is coupled to the second shaft via a tower shaft and gear assembly.

12. The gas turbine engine as recited in claim 9, 10 or 11, wherein the at least one bearing supports the second shaft, and wherein the seal assembly includes at least one first seal positioned upstream of the at least one bearing and at least one second seal positioned downstream of the at least one bearing, and wherein buffer air supplied by the buffer air system facilitates sealing of the first and second seals to prevent weeping of oil out of the bearing compartment during the engine start event.

13. The gas turbine engine as recited in any of claims 9 to 12, including a fan section that is connected to the first shaft through a geared architecture.

14. A method comprising:
providing at least a first shaft and a second shaft, wherein the first shaft interconnects a first compressor section and a first turbine section, and wherein the at least one first shaft rotates about an engine axis of rotation at a first speed;
interconnecting a second compressor section and a second turbine section via the second shaft, wherein the second shaft rotates at a second speed faster than the first speed;
supporting one of the first and second shafts with at least one bearing, the at least one bearing positioned within a bearing compartment sealed by a seal assembly;
providing torque to the second shaft during an engine start event using a starter turbine, the starter turbine including an air inlet and an outlet; and
connecting a buffer air system with the starter turbine via at least one conduit, wherein the at least one conduit receives air associated with the outlet and directs the air into the buffer air system to maintain a positive delta pressure across the seal assembly during the engine start event.

15. The method as recited in claim 14, including coupling the air inlet to receive air from at least one of an auxiliary power unit, a ground start cart, or an opposing gas turbine engine; and/or
including providing at least one valve associated with the at least one conduit to control air flow between the buffer air system and the starter turbine,
wherein, optionally, the at least one valve comprises a check valve.
